# EUROPEAN PATENT SPECIFICATION

(11) **EP 3 092 198 B1**
(45) Date of publication and mention of the grant of the patent: **09.09.2020**
(21) Application number: 14878084.4
(22) Date of filing: 31.12.2014
(51) Int. Cl.: C01F 7/00, C01F 7/06

(54) **SURFACTANT BASED SMALL MOLECULES FOR REDUCING ALUMINOSILICATE SCALE IN THE BAYER PROCESS**
TENSIDBASIERTE KLEINE MOLEKÜLE ZUR VERMINDERUNG VON ALUMINOSILICATABLAGERUNGEN IM BAYER-VERFAHREN
PETITES MOLÉCULES À BASE DE TENSIOACTIF POUR RÉDUIRE LE TARTRE D'ALUMINOSILICATE DANS LE PROCÉDÉ BAYER

(30) Priority: 09.01.2014 US 201414151368
(43) Date of publication of application: 16.11.2016
(73) Proprietor: Nalco Company, Naperville, IL 60563 (US)
(72) Inventor: URBANI, Carl Nicolas, Lesmurdie, Western Australia 6076 (AU); LA, Timothy, Kardinya, Western Australia 6163 (AU); KILDEA, John David, Baldivis, Western Australia 6171 (AU)
(74) Representative: Godemeyer Blum Lenze Patentanwälte Partnerschaft mbB - werkpatent
(86) International application number: PCT/US2014/073050
(87) International publication number: WO 2015/105723

(56) References cited:
- WO-A1-2008/045677
- US-A- 6 086 771
- US-A1- 2009 026 064
- US-A1- 2012 148 462
- US-A1- 2013 189 529
- US-A1- 2013 343 970
- US-B2- 6 814 873

## Description

### Background of the Invention

The invention relates to methods for improving treatment and inhibition of scale in various industrial process streams, in particular certain surfactant based small molecules that have been found to be particularly effective in treating aluminosilicate scale in a Bayer process stream.

As described among other places in US Patent 6,814,873, the Bayer process is used to manufacture alumina from Bauxite ore. The process uses caustic solution to extract soluble alumina values from the bauxite. After dissolution of the alumina values from the bauxite and removal of insoluble waste material from the process stream the soluble alumina is precipitated as solid alumina trihydrate. The remaining caustic solution known as "liquor" and / or "spent liquor" is then recycled back to earlier stages in the process and is used to treat fresh bauxite. It thus forms a fluid circuit. For the purposes of this application, this description defines the term "liquor". The recycling of liquor within the fluid circuit however has its own complexities.

Bauxite often contains silica in various forms and amounts. Some of the silica is unreactive so it does not dissolve and remains as solid material within the Bayer circuit. Other forms of silica (for example clays) are reactive and dissolve in caustic when added into Bayer process liquors, thus increasing the silica concentration in the liquor. As liquor flows repeatedly through the circuit of the Bayer process, the concentration of silica in the liquor further increases, eventually to a point where it reacts with aluminum and soda to form insoluble aluminosilicate particles. Aluminosilicate solid is observed in at least two forms, sodalite and cancrinite. These and other forms of aluminosilicate are commonly referred to, and for the purposes of this application define, the terms "desilication product" or "DSP".

DSP can have a formula of 3(Na₂O•Al₂O₃•2SiO_{2•}0-2 H₂O) • 2NaX where X represents OH⁻, Cl⁻, CO₃²⁻, SO₄²⁻. Because DSP has an inverse solubility (precipitation increases at higher temperatures) and it can precipitate as fine scales of hard insoluble crystalline solids, its accumulation in Bayer process equipment is problematic. As DSP accumulates in Bayer process pipes, vessels, heat transfer equipment, and other process equipment, it forms flow bottlenecks and obstructions and can adversely affect liquor throughput. In addition because of its thermal conductivity properties, DSP scales on heat exchanger surfaces reduce the efficiency of heat exchangers.

These adverse effects are typically managed through a descaling regime, which involves process equipment being taken offline and the scale being physically or chemically treated and removed. A consequence of this type of regime is significant and regular periods of down-time for critical equipment. Additionally as part of the descaling process the use of hazardous concentrated acids such as sulfuric acid are often employed and this constitutes an undesirable safety hazard.

Another way Bayer process operators manage the buildup of silica concentration in the liquor is to deliberately precipitate DSP as free crystals rather than as scale. Typically a "desilication" step in the Bayer process is used to reduce the concentration of silica in solution by precipitation of silica as DSP, as a free precipitate. While such desilication reduces the overall silica concentration within the liquor, total elimination of all silica from solution is impractical and changing process conditions within various parts of the circuit (for example within heat exchangers) can lead to changes in the solubility of DSP, resulting in consequent precipitation as scale.

Previous attempts at controlling and/or reducing DSP scale in the Bayer process have included adding polymer materials containing three alkyloxy groups bonded to one silicon atom as described in US patent 6,814,873 B2, US published applications 2004/0162406 A1, 2004/0011744 A1, 2005/0010008 A2, international published application WO 2008/045677 A1, and published article Max HTTM Sodalite Scale Inhibitor: Plant Experience and Impact on the Process, by Donald Spitzer et. al., Pages 57-62, Light Metals 2008, (2008).

Manufacturing and use of these trialkoxysilane-grafted polymers however can involve unwanted degrees of viscosity, making handling and dispersion of the polymer through the Bayer process liquor problematic. Other previous attempts to address foulant buildup are described in US Patents 5,650,072 and 5,314,626.

US published application 2012/148462 A1 provides a method of inhibiting the accumulation of DSP scale in the liquor circuit of Bayer process equipment. The method includes adding one or more particular silane based small molecules to the liquor fluid circuit. These scale inhibitors reduce DSP scale formation and thereby increase fluid throughput, increase the amount of time Bayer process equipment can be operational and reduce the need for expensive and dangerous acid washes of Bayer process equipment. As a result, the method provides a significant reduction in the total cost of operating a Bayer process.

Thus while a range of methods are available to Bayer process operators to manage and control DSP scale formation, there is a clear need for, and utility in, an improved method of preventing or reducing DSP scale formation on Bayer process equipment.

### Brief Summary of the Invention

To satisfy the long-felt but unsolved needs identified above, at least one embodiment of the invention is directed towards a method for reducing aluminosilicate scale in a Bayer process comprising the step of adding to a Bayer liquor an aluminosilicate scale reducing amount of a non-polymeric reaction product resulting from the reaction of: a surfactant, an amine binder, an epoxide binder, and a glycidoxyalkyltrimethoxysilane (GPS), wherein the surfactant is dodecyl-1,3-propanediamine.

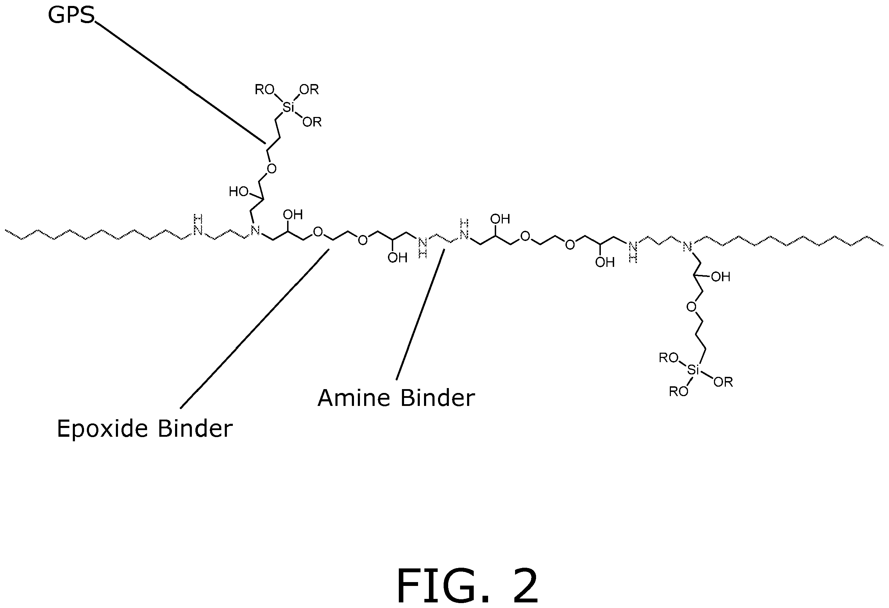

The non-polymeric reaction product may be a resultant from the reaction of the above items further comprising at least one hydrophobe. The GPS may be 3-glycidoxypropyltrimethoxysilane. The epoxide binder may be a molecule according to formulas (I), (II), and any combination thereof: 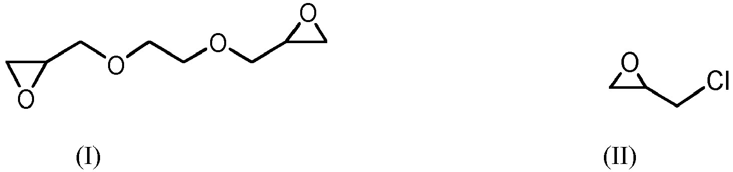 The hydrophobe may be a C8-C10 aliphatic glycidyl ether. The reaction product may have a molecular weight of less than 500 g/mol (daltons). The reaction product may be according to the formula illustrated in FIG. 2.

The reaction product may be formed at least in part according to one of the methods selected from the group consisting of Methods: IV, V, VI, VII, VIII, IX, X, XI, XII, and XIII, and any combination thereof. The amine binder may be one selected from the list consisting of: tetraethylenepentamine and ethylenediamine.

Additional features and advantages are described herein, and will be apparent from the following Detailed Description.

### Brief Description of the Drawings

A detailed description of the invention is hereafter described with specific reference being made to the drawings in which:
**FIG. 1** is an illustration of the formula of reaction product X (not according to the invention as presently claimed).
**FIG. 2** is an illustration of the formula of reaction product BB.
**FIG. 3** is a first table of Formula types used in the invention (not according to the invention as presently claimed).
**FIG. 4** is a second table of Formula types used in the invention.
**FIG. 5** is a third table of Formula types used in the invention.
**FIG. 6** is a fourth table of Formula types used in the invention

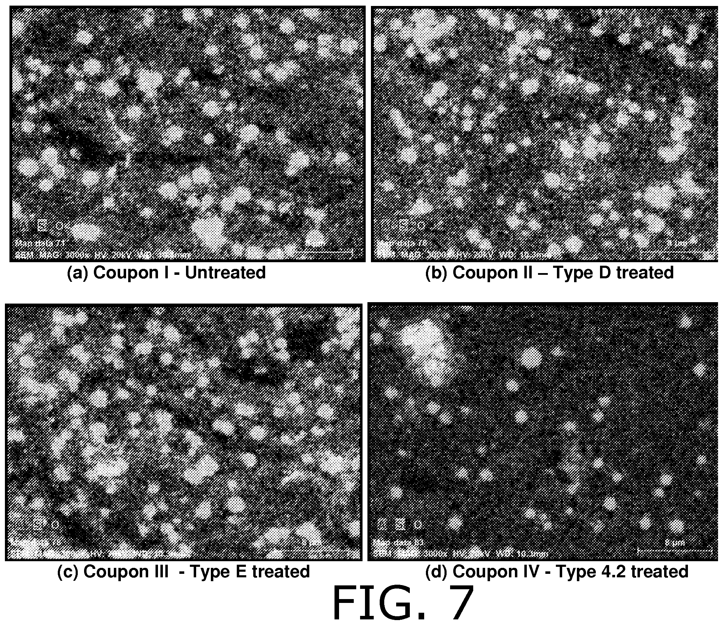

**FIG. 7** is an illustration of SEM (Scanning Electron Microscope) analysis demonstrating the efficacy of the invention.

### Detailed Description of the Invention

The following definitions are provided to determine how terms used in this application, and in particular how the claims, are to be construed.

***"Polymer"*** means a chemical compound comprising essentially repeating structural units each containing two or more atoms. While many polymers have large molecular weights of greater than 500, some polymers such as polyethylene can have molecular weights of less than 500. Polymer includes copolymers and homo polymers.

***"Small molecule"*** means a chemical compound comprising essentially non-repeating structural units. Because an oligomer (with more than 10 repeating units) and a polymer are essentially comprised of repeating structural units, they are not small molecules. Small molecules can have molecular weights above and below 500. The terms "small molecule" and "polymer" are mutually exclusive.

***"Foulant"*** means a material deposit that accumulates on equipment during the operation of a manufacturing and/or chemical process which may be unwanted and which may impair the cost and/or efficiency of the process. DSP is a type of foulant.

***"Amine"*** means a molecule containing one or more nitrogen atoms and having at least one secondary amine or primary amine group. By this definition, monoamines such as dodecylamine, diamines such as hexanediamine, and triamines such as diethylenetriamine, are all amines.

***"GPS"*** is glycidoxyalkyltrimethoxysilane which includes 3-glycidoxypropyltrimethoxysilane, one possible formula for GPS can be represented by the structure:

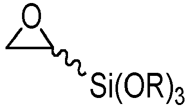

***"Ethoxylated Alcohol"*** means an alcohol according to the formula:

R-(EO)ₙ-OH

wherein EO is an ethoxy group (-OCH2CH2-) and n is an integer within the range 1-50.

***"Ethoxylated Amine"*** means an amine according to the formula: 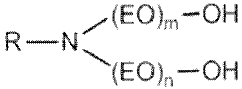 wherein EO is an ethoxy group (-OCH2CH2-), m is an integer within the range 1-50, and n is an integer within the range 1-50.

***"G12A7"*** means a C12-C14 non-ionic alcohol ethoxylate surfactant, a representative example of which is Teric G12A7 sold by Huntsman.

***"G12A4"*** means a C12-C14 non-ionic alcohol ethoxylate surfactant, a representative example of which is Teric G12A4 sold by Huntsman.

***"G17A3"*** means a C16-C18 straight chain non-ionic alcohol ethoxylate surfactant, a representative example of which is Teric G17A3 sold by Huntsman.

***"G9A6"*** means a C9-C11 straight chain non-ionic alcohol ethoxylate surfactant, a representative example of which is Teric G9A6 sold by Huntsman.

***"G9A8"*** means a C9-C11 straight chain non-ionic alcohol ethoxylate surfactant, a representative example of which is Teric G9A8 sold by Huntsman.

***"18M20"*** means a C18-C22 alkyl amine ethoxylate surfactant, a representative example of which is Teric 18M20 sold by Huntsman.

***"18M2"*** means a C18-C22 alkyl amine ethoxylate surfactant, a representative example of which is Teric 18M2 sold by Huntsman.

***"16M2"*** means a C16-C18 alkyl amine ethoxylate surfactant, a representative example of which is Teric 16M2 sold by Huntsman.

***"TAM5"*** means tallow alkyl amine ethoxylate surfactant, a representative example of which is Agnique TAM5 sold by Cognis.

***"DPD"*** means dodecyl-1,3-propanediamine

***"EGDGE"*** means ethylene glycol diglycidylether

***"OPD"*** means oleyl-1,3-propanediamine

***"EPI"*** means epichlorohydrin

***"OA"*** means octylamine

***"ED"*** means ethylenediamine

***"OLA"*** means oleylamine

***"TEPA"*** means tetraethylenepentamine

***"AGE"*** means C8-C10 aliphatic glycidyl ether

***"Alkyloxy"*** means having the structure of OX where X is a hydrocarbon and O is oxygen. It can also be used interchangeably with the term "alkoxy". Typically in this application, the oxygen is bonded both to the X group as well as to a silicon atom of the small molecule. When X is C₁ the alkyloxy group consists of a methyl group bonded to the oxygen atom. When X is C₂ the alkyloxy group consists of an ethyl group bonded to the oxygen atom. When X is C₃ the alkyloxy group consists of a propyl group bonded to the oxygen atom. When X is C₄ the alkyloxy group consists of a butyl group bonded to the oxygen atom. When X is C₅ the alkyloxy group consists of a pentyl group bonded to the oxygen atom. When X is C₆ the alkyloxy group consists of a hexyl group bonded to the oxygen atom.

***"Monoalkyloxy"*** means that attached to a silicon atom is one alkyloxy group.

***"Dialkyloxy"*** means that attached to a silicon atom are two alkyloxy groups.

***"Trialkyloxy"*** means that attached to a silicon atom are three alkyloxy groups.

***"Synthetic Liquor"*** or ***"Synthetic Spent Liquor"*** is a laboratory created liquid used for experimentation whose composition in respect to alumina, soda, and caustic corresponds with the liquor produced by recycling through the Bayer process.

***"Bayer Liquor"*** is actual liquor that has run through a Bayer process in an industrial facility.

***"Separation"*** means a mass transfer process that converts a mixture of substances into two or more distinct product mixtures, at least one of which is enriched in one or more of the mixture's constituents, it includes but is not limited to such processes as: Adsorption, Centrifugation, cyclonic separation, density based separation, Chromatography, Crystallization, Decantation, Distillation, Drying, Electrophoresis, Elutriation, Evaporation, Extraction, Leaching extraction, Liquid-liquid extraction, Solid phase extraction, Flotation, Dissolved air flotation, Froth flotation, Flocculation, Filtration, Mesh filtration, membrane filtration, microfiltration, ultrafiltration, nanofiltration, reverse osmosis, Fractional distillation, Fractional freezing, Magnetic separation, Precipitation, Recrystallization, Sedimentation, Gravity separation, Sieving, Stripping, Sublimation, Vapor-liquid separation, Winnowing, Zone refining, and any combination thereof.

***"Thickener"*** or ***"Settler"*** means a vessel used to effect a solid-liquid separation of a slurry, often with the addition of flocculants, the vessel constructed and arranged to receive a slurry, retain the slurry for a period of time sufficient to allow solid portions of the slurry to settle downward (underflow) away from a more liquid portion of the slurry (overflow), decant the overflow, and remove the underflow. Thickener underflow and thickener overflow are often passed on to filters to further separate solids from liquids.

In the Bayer process for manufacturing alumina, bauxite ore passes through a grinding stage and alumina, together with some impurities including silica, are dissolved in added liquor. The mixture then typically passes through a desilication stage where silica is deliberately precipitated as DSP to reduce the amount of silica in solution. The slurry is passed on to a digestion stage where any remaining reactive silica dissolves, thus again increasing the concentration of silica in solution which may subsequently form more DSP as the process temperature increases. The liquor is later separated from undissolved solids, and alumina is recovered by precipitation as gibbsite. The spent liquor completes its circuit as it passes through a heat exchanger and back into the grinding stage. DSP scale accumulates throughout the Bayer process but particularly at the digestion stage and most particularly at or near the heat exchanger, where the recycled liquor passes through.

In this invention, it was discovered that dosing of various types of small molecule based products can reduce the amount of DSP scale formed. The small molecules are reaction products of surfactants with GPS, amine binders, and epoxide binders. FIG. 2 shows a representative structure of a small molecule constituted by combinations of surfactant, GPS, epoxide binder and amine binder and which is an example of the possible reaction product combination encompassed by this embodiment. In at least one embodiment of the invention, an effective concentration of the small molecule product is added to some point or stage in the liquor circuit of the Bayer process, which minimizes or prevents the accumulation of DSP on vessels or equipment along the liquor circuit.

As described in US Patent 8,545,776 the small molecule DG12 is an example of a small molecule which is a reaction product of a surfactant and GPS. Similarly small molecule TG14 also in US Patent 8,545,776, and the various small molecules such as GEN1, GEN2, and GEN3 are described in US Published Patent Applications 2011/0212006 and 2012/0148462 are reaction products of some of these items. The invention excludes TG14, DG12, GEN1, GEN2, and GEN3.

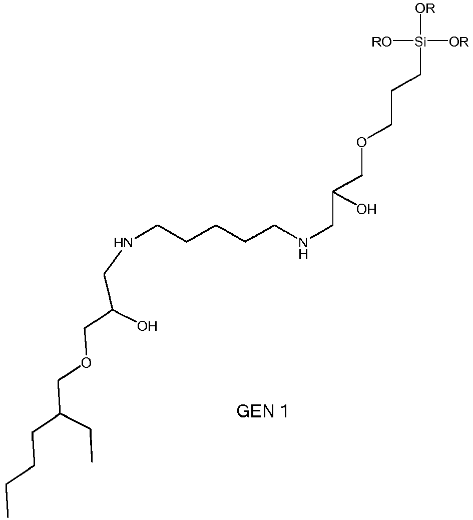

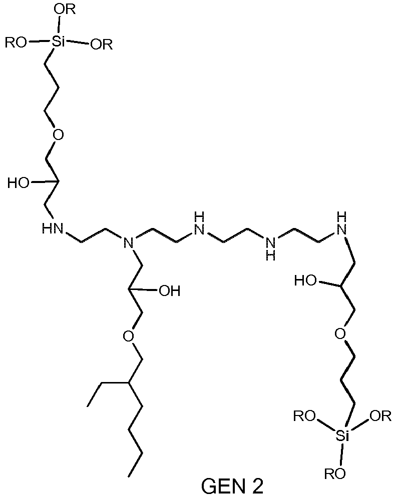

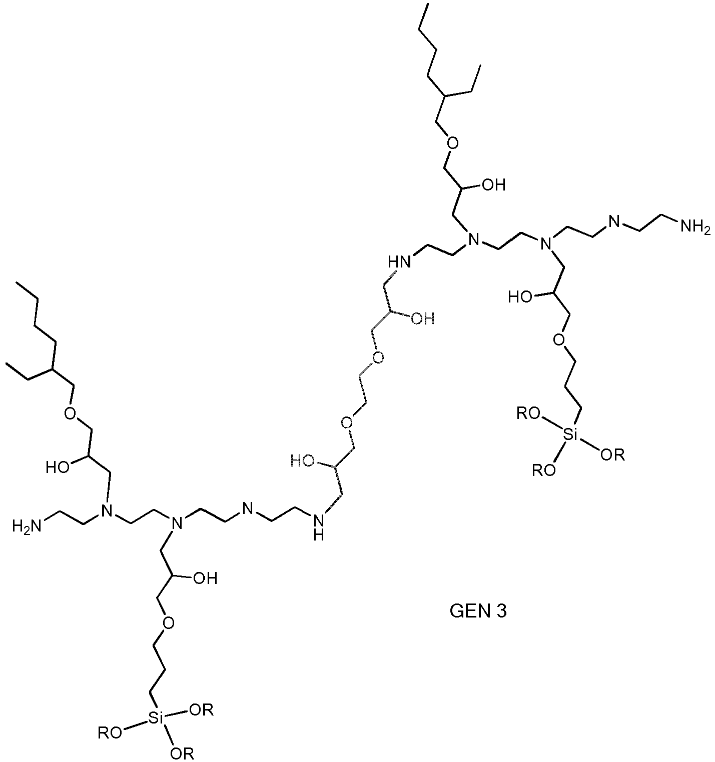

In at least one embodiment the reaction product is formed at least in part by allowing two or more of the reactants to contact each other for a period of time between 1 minute and 55 days, and/or by allowing the reactants to contact each other at a temperature of between 20°C and 500°C. The invention encompasses adding any of some or all the reactants to the reaction simultaneously and/or in any sequential order. Any portion of the reaction may occur within one or more of: a liquid medium, a water medium, in the presence of acid and/or base, and or under acidic, basic, or neutral conditions. Any portion of the reaction may occur at least in part in the presence of one or more catalysts.

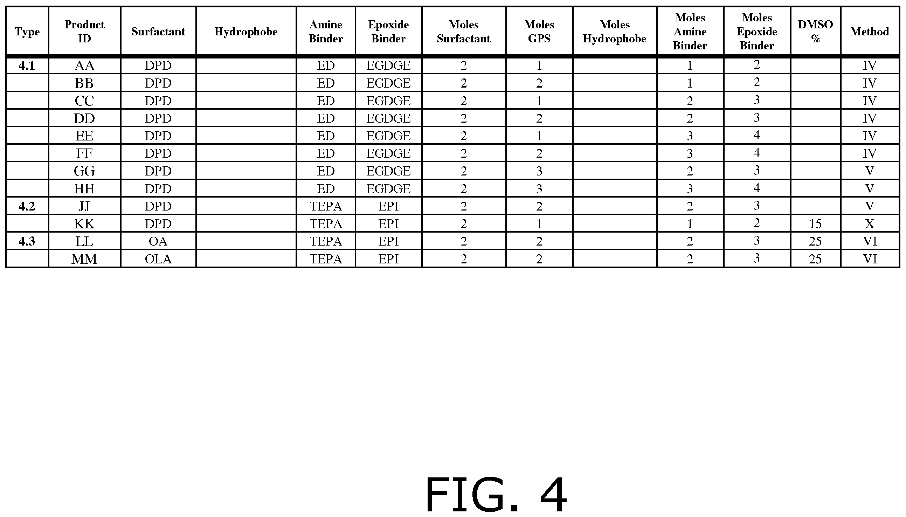

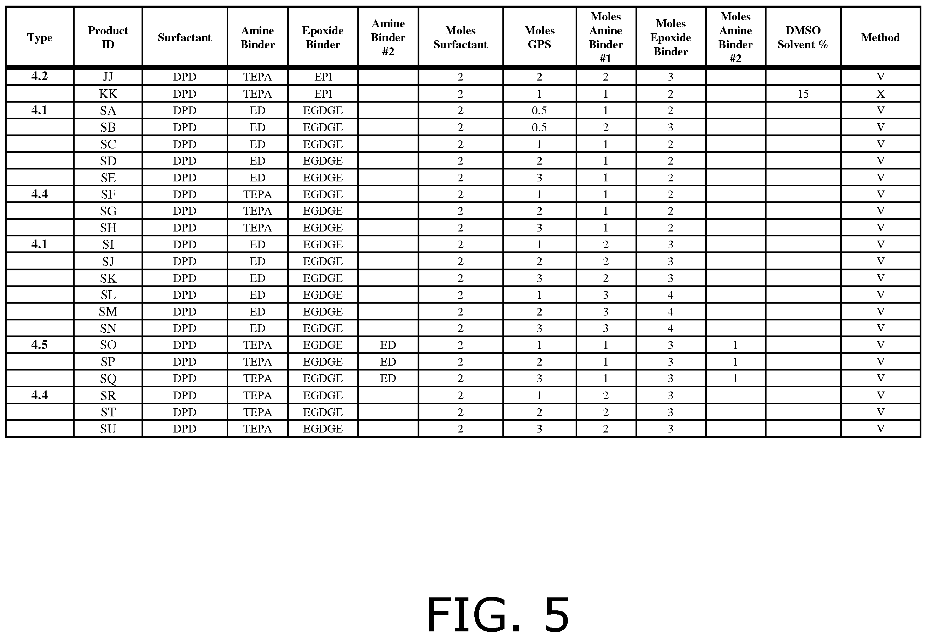

FIG. 4, FIG 5 and FIG. 6 are tables illustrating some of the possible reaction product combinations encompassed by this embodiment.

In at least one embodiment the epoxide binder is according to one or more of the formulas (I) and (II):

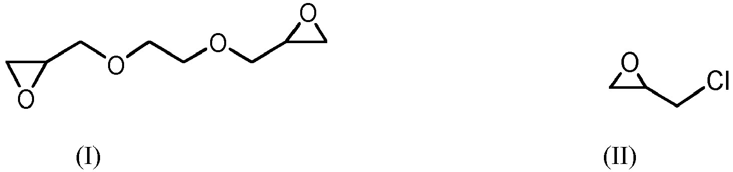

In at least one embodiment the hydrophobe is a C8-C10 aliphatic glycidyl ether. The hydrophobe may be described as a linear or branched, aromatic or aliphatic hydrocarbon chain which may optionally contain an ether linkage or additional functional end group such as an epoxide which allows the hydrophobe to be reacted with and attached to other molecules. The hydrocarbon chain may consist of between 3 and 50 carbon atoms

In at least one embodiment the hydrophobe is according to formula (III) where R' is a linear or branched hydrocarbon chain containing at least 3 carbon atoms:

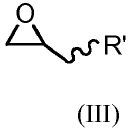

In at least one embodiment, the amine binder is selected from a linear or branched, aliphatic or cycloaliphatic monoamines, diamines, triamines, butamines, and pentamines. The total number of carbon atoms in the amine is preferred to be less than 30 and more preferred to be less than 20. In at least one embodiment the amine is selected from a list consisting of: tetraethylene pentamine, ethylene diamene, and any combination thereof.

In at least one embodiment, an amine small molecule is reacted with both 3-glycidoxypropyltrialkoxysilane (GPS) and a hydrophobic molecule to form a DSP inhibition composition. The hydrophobic molecule is an amine-reactive compound having an amine-reactive functional group such as glycidyl, chloro, bromo, or isocyanato groups. Besides the amine-reactive group, the hydrophobic molecule has at least one C₃-C₂₂ hydrophobic carbon chain, aromatic or aliphatic, linear or branched.

In at least one embodiment, the amine molecule is selected from linear or branched, aliphatic or cycloaliphatic monoamines or diamines. The total number of carbon atoms in the amine is preferred to be less than 30 and more preferred to be less than 20.

In at least one embodiment the amine is selected from a list consisting of: isophoronediamine, xylenediamine, bis(aminomethyl)cyclohexane, hexanediamine, C,C,C-trimethylhexanediamine, methylene bis(aminocyclohexane), saturated fatty amines, unsaturated fatty amines such as oleylamine and soyamine, N-fatty-1,3-propanediamine such as cocoalkylpropanediamine, oleylpropanediamine, dodecylpropanediamine, hydrogenized tallowalkylpropanediamine, and tallowalkylpropanediamine and any combination thereof.

Not according to the invention as presently claimed the reaction product is Product P, which is a reaction product of GPS with a surfactant having a formula of:

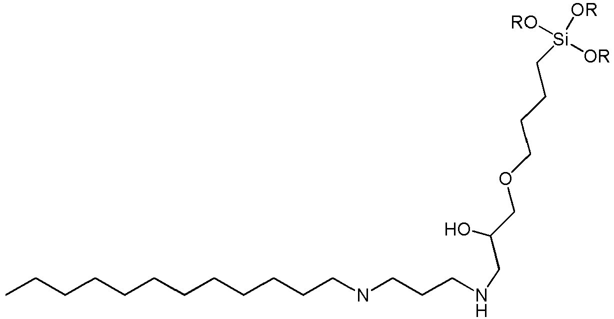

Not according to the invention as presently claimed the reaction product is Product U, which is a reaction product of GPS with a surfactant and a hydrophobe having a formula of:

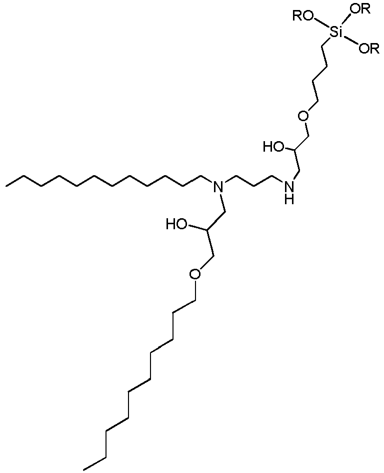

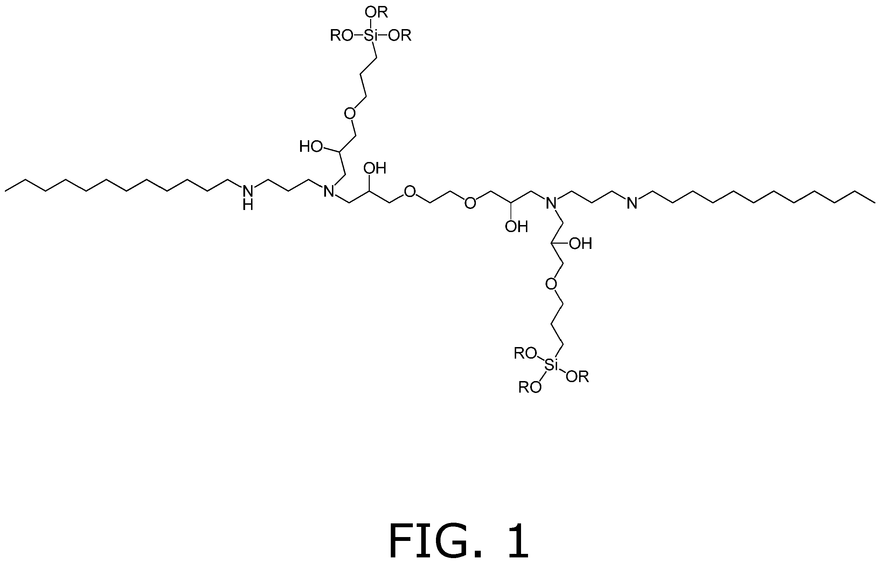

Not according to the invention as presently claimed the reaction product is Product X, which is a reaction product of GPS with a surfactant, a hydrophobe and an epoxide binder having a formula illustrated in FIG 1.

In at least one embodiment the reaction product is Product BB, which is a reaction product of GPS with a surfactant, a hydrophobe, an epoxide binder and an amine binder having a formula illustrated in FIG 2.

In at least one embodiment the reaction conditions results in the formation of two or more of the aforementioned reaction products. In at least one embodiment the composition introduced to address DSP contains one, two, or more of the aforementioned reaction products.

In at least one embodiment the resulting surfactant based small molecules are added to a dilute caustic solution prior to addition to the process stream.

These small molecules reduce the amount of DSP scale formed and thereby prevents its accumulation on Bayer process equipment.

The effectiveness of these small molecules was unexpected as the prior art teaches that only high molecular weight polymers are effective. Polymer effectiveness was presumed to depend on their hydrophobic nature and their size. This was confirmed by the fact that cross-linked polymers are even more effective than single chain polymers. As a result it was assumed that small molecules only serve as building blocks for these polymers and are not effective in their own right. (WO 2008/045677 [0030]). Furthermore, the scientific literature states "small molecules containing" ... "[an] Si-O₃ grouping are not effective in preventing sodalite scaling".... because ... "[t]he bulky group" ... "is essential [in] keeping the molecule from being incorporated into the growing sodalite." Page 57 9 Light Metals 2008, (2008). However it has recently been discovered that in fact, as further explained in the provided examples, small molecules such as those described herein are actually effective at reducing DSP scale.

It is believed that there are at least three advantages to using a small molecule-based inhibitor as opposed to a polymeric inhibitor with multiple repeating units of silane and hydrophobes. A first advantage is that the smaller molecular weight of the product means that there are a larger number of active, inhibiting moieties available around the DSP seed crystal sites at the DSP formation stage. A second advantage is that the lower molecular weight allows for an increased rate of diffusion of the inhibitor, which in turn favors fast attachment of the inhibitor molecules onto DSP seed crystals. A third advantage is that the lower molecular weight avoids high product viscosity and so makes handling and injection into the Bayer process stream more convenient and effective.

In at least one embodiment DSP scale is addressed using one or more of the methods of application described in US Patent Applications 13/035,124, 13/403,282, 13/791,577, 14/011,051, US Patents 5,314,626, 6,814,873, 7,390,415, 7,442,755, 7,763,698, International Patent Applications WO 02/070411, WO 2008/045677, WO 2012/115769, and US Published Patent Applications 2004/0162406, 2004/0011744, 2010/0256317, 2011/0076209, 2011/0212006, and 2012/0148462.

### EXAMPLES

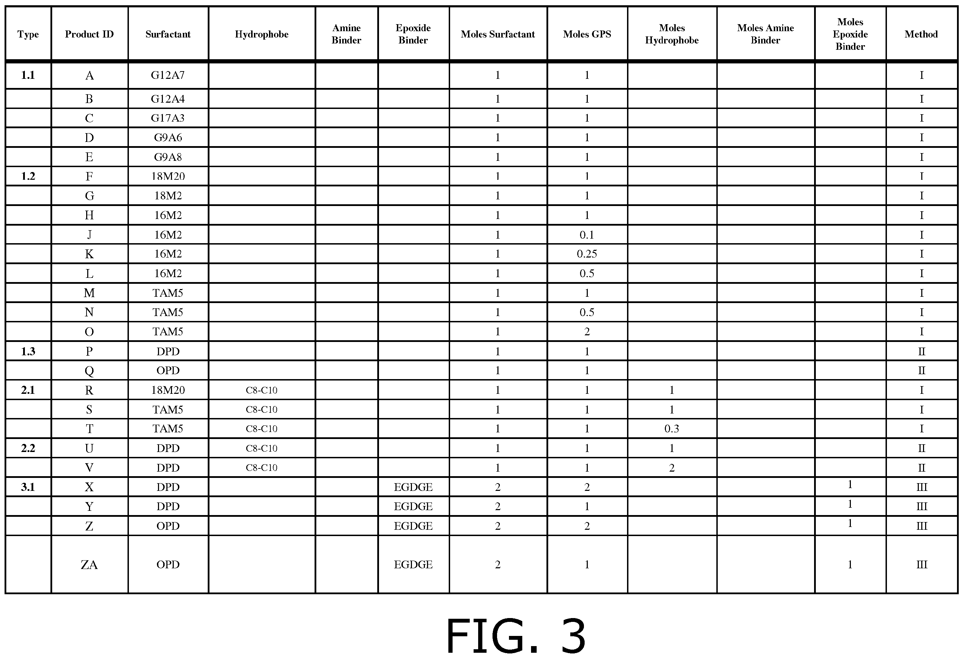

A number of reaction products were produced using the reactants listed in FIG. 3, FIG. 4, and FIG. 5 according to the various methods described below. The mass of surfactant added to all reactions was 5 g. Masses of other reactants were calculated from the mole ratios described in Figures 3, 4 and 5. Hydroxy-terminated surfactants (not according to the invention as presently claimed)

Method I **(not according to the invention as presently claimed):** A mixture of surfactant (di-hydroxy terminated) and hydrophobe was stirred and heated at 65°C. A solution of NaOH (50% in water) was added and the mixture left for 30 min at 65°C. Glycidoxypropyltrimethoxysilane was then added and the mixture left for 2 h at 65°C. The reaction mixture was cooled then diluted to 5 % w/w in 20 g/L NaOH solution.
- NaOH was added at 2 molar equivalents to that of added epoxide.
- For A - O products, Method I was used excluding incorporation of hydrophobe.

### Amino-terminated surfactants

Method II **(not according to the invention** as presently claimed): Surfactant was stirred and heated at 65°C. Hydrophobe was added and the mixture left for 30 min at 65°C. Glycidoxypropyltrimethoxysilane was then added and the mixture left for 2 h at 65°C. The reaction mixture was cooled then diluted to 5 % w/w in 20 g/L NaOH solution.
   - For products P and Q, Method II was used excluding incorporation of hydrophobe.
Method III **(not according to the invention as presently claimed):** Surfactant was stirred and heated at 65°C. Epoxide binder was added and the mixture left for 30 min at 65°C. Glycidoxypropyltrimethoxysilane was then added and the mixture left for 2 h at 65°C. The reaction mixture was cooled then diluted to 5 % w/w in 20 g/L NaOH solution.
Method IV: A mixture of surfactant and amine binder was stirred and heated at 65°C. Epoxide binder was added and the mixture left for 30 min at 65°C. Glycidoxypropyltrimethoxysilane was then added and the mixture left for 2 h at 65°C. The reaction mixture was cooled then diluted to 5 % w/w in 20 g/L NaOH solution.
   - Products EE and FF were allowed to react for 60 min at 65°C prior to addition of the glycidoxypropyltrimethoxysilane.
Method V: A mixture of surfactant and amine binder was stirred and heated at 65°C. Epoxide binder was slowly added to the mixture then left for 2 h total at 65°C. Glycidoxypropyltrimethoxysilane was then slowly added and the mixture left for 1 h total at 65°C. The reaction mixture was cooled then diluted to 5 % w/w in 20 g/L NaOH solution.
Method VI: A mixture of surfactant, amine binder and DMSO was stirred and heated at 65°C. Epoxide binder was slowly added to the mixture then left for 3 h total at 65°C. Glycidoxypropyltrimethoxysilane was then slowly added to the mixture. After 30 min a sample was taken from the reaction mixture and added slowly to a stirred 20 g/L NaOH solution, diluting the sample to a concentration of 13.3% w/w.
Method VII: A mixture of surfactant and amine binder was stirred and heated at 65°C. Epoxide binder was slowly added to the mixture then left for 30 min total at 65°C. Glycidoxypropyltrimethoxysilane was then slowly added to the mixture. After 19 min a sample was taken from the reaction mixture and added slowly to a stirred 20 g/L NaOH solution, diluting the sample to a concentration of 10 %w/w.
Method VIII: A mixture of surfactant and amine binder was stirred and heated at 65°C. Epoxide binder was slowly added to the mixture then left for 1 h total at 65°C. Glycidoxypropyltrimethoxysilane was then slowly added to the mixture. After 15 min a sample was taken from the reaction mixture and added slowly to a stirred 20 g/L NaOH solution, diluting the sample to a concentration of 10 %w/w.
Method IX: A mixture of surfactant, amine binder and DMSO was stirred and heated at 65°C. Epoxide binder was slowly added to the mixture then left for 1 h total at 65°C. Glycidoxypropyltrimethoxysilane was then slowly added to the mixture and the mixture left for 1 h. The reaction mixture was cooled then diluted to 10 % w/w in 20 g/L NaOH solution.
Method X: A mixture of surfactant, amine binder and DMSO was stirred and heated at 65°C. Epoxide binder was slowly added to the mixture then left for 3 h total at 65°C. Glycidoxypropyltrimethoxysilane was then slowly added to the mixture. After 16 min a sample was taken from the reaction mixture and added slowly to a stirred 20 g/L NaOH solution, diluting the sample to a concentration of 11.8%.
Method XI: The reaction mixture from Method X was left at 65°C for a further 44 min post sampling, cooled then diluted to 11.8 %w/w in 20 g/L NaOH solution.
Method XII: A mixture of surfactant, amine binder and DMSO was stirred and heated at 65°C. Epoxide binder was slowly added to the mixture then left for 2 h and 2 min total at 65°C. Glycidoxypropyltrimethoxysilane was then slowly added to the mixture. After 20 min a sample was taken from the reaction mixture and added slowly to a stirred 20 g/L NaOH solution, diluting the sample to a concentration of 11.8%.
Method XIII: The reaction mixture from Method XII was left at 65°C for a further 40 min post sampling, cooled then diluted to 11.8 %w/w in 20 g/L NaOH solution.

### RESULTS: Test 1 Bottle Test Method

Assessment of inhibition of DSP formation used test conditions similar to those previously used and published. To a stirred sample of plant spent liquor, a small volume of concentrated sodium metasilicate pentahydrate solution was added slowly so as to increase the amount of silica in the liquor (typically the concentration was increased by approximately 1 g/L as SiO2). This "spiked" liquor was then split into batches of 500 mL for treatment by addition of the appropriate inhibitor at the desired dose. One batch of spiked liquor was kept as untreated liquor.

Each of the treated batches was then sub-sampled to deliver duplicate samples which were individually placed into 250 mL Nalgene polypropylene bottles and placed into a rotating water bath at 95°C. Duplicate untreated control samples were also included. After heating for 3 hours, the bottles were removed from the bath and the solids were collected by filtration, washed with hot water and dried in the oven at 110°C. After drying the resulting mass of DSP solids precipitated was weighed. The efficacy of the treatment was determined by comparing the mass of DSP precipitated from the individual treated samples to the untreated control samples in the same test.

Results are presented as a percent calculated as: (Average mass treated / Average mass untreated) x 100. A value of 100% means no effective inhibition (same mass as untreated) while a value less than 100% indicates some inhibitory activity. Lower numbers indicate more effective inhibition.

### Type 1.1 Ethoxylated Alcohol Surfactant / Siloxane (not according to the invention as presently claimed)

**Table 1 % Sodalite Precipitated**

| **Product** | **Dose (ppm)** | | |
|---|---|---|---|
| | 80 | 120 | 160 |
| A | 88 | 75 | |
| A* | 78 | 73 | |
| A* | 66 | | 57 |
| B | 72 | | 61 |
| C | 72 | | 61 |
| D | 69 | 45 | |
| E | 70 | 61 | 61 |

| | | | |
|---|---|---|---|
| *test repeated under the same test conditions as previous | | | |

### Type 1.2 Ethoxylated Amine Surfactant / Siloxane (not according to the invention as presently claimed)

**Table 2: % Sodalite Precipitated**

| **Product** | **Dose (ppm)** | | | | |
|---|---|---|---|---|---|
| | 80 | 120 | 160 | 200 | 220 |
| F | 77 | 91 | | | |
| G | 6 | | 0.6 | | |
| H | 16 | | 2 | | |
| H* | 8 | | 2 | | 1 |
| H* | 11 | | 2 | | 0.8 |
| J | 91 | | 58 | | |
| K | 36 | | 11 | | |
| L | 17 | | 4 | | |
| M | 23 | 6 | | | |
| M* | 28 | | 5 | 4 | |
| M* | 25 | | 6 | | |
| N | 27 | | 7 | | |
| O | 30 | | 4 | | |

| | | | | | |
|---|---|---|---|---|---|
| *test repeated under the same test conditions as previous | | | | | |

### Type 1.3 Fatty Amine Surfactant / Siloxane (not according to the invention as presently claimed)

**Table 3: % Sodalite Precipitated**

| **Product** | **Dose (ppm)** | | |
|---|---|---|---|
| | 40 | 80 | 120 |
| P | 59 | 16 | 7 |
| Q | 43 | 58 | 48 |

### Type 2.1 Ethoxylated Amine Surfactant / Siloxane / Hydrophobe (not according to the invention as presently claimed)

**Table 4: % Sodalite Precipitated**

| **Product** | **Dose (ppm)** | |
|---|---|---|
| | 80 | 120 |
| R | 95 | 101 |
| S | 71 | 81 |
| T | 33 | 9 |
| T* | 32 | 6 |

| | | |
|---|---|---|
| *test repeated under the same conditions as previous | | |

### Type 2.2 Fatty Amine Surfactant / Siloxane / Hydrophobe (not according to the invention as presently claimed)

**Table 5: % Sodalite Precipitated**

| **Product** | **Dose (ppm)** | | |
|---|---|---|---|
| | 40 | 80 | 120 |
| U | | 13 | 9 |
| U* | 56 | 28 | 7 |
| V | | 86 | 72 |

| | | | |
|---|---|---|---|
| *test repeated under the same conditions as previous | | | |

### Type 3.1 Fatty Amine Surfactant / Siloxane / Epoxide Binder (not according to the invention as presently claimed)

**Table 6: % Sodalite Precipitated**

| **Product** | **Dose (ppm)** | | | | | |
|---|---|---|---|---|---|---|
| | 20 | 40 | 80 | 100 | 120 | 140 |
| X | | 37 | 3 | | 1 | |
| Y | | 22 | 4 | | 0.2 | |
| Y* | 58 | 28 | 13 | 8 | 4 | 3 |
| Y* | | 15 | 1.5 | | | 0.4 |
| Z | | 27 | 13 | | 5 | |
| ZA | | 52 | 3 | | 3 | |

| | | | | | | |
|---|---|---|---|---|---|---|
| *test repeated under the same conditions as previous tests | | | | | | |

### Type 4.1 Fatty Amine Surfactant / Siloxane / Amine Binder / Epoxide Binder

**Table 7: %Sodalite Precipitated**

| **Product** | **Dose (ppm)** | | | | | |
|---|---|---|---|---|---|---|
| | 10 | 20 | 40 | 60 | 80 | 140 |
| AA | | | 57 | | 11 | 4 |
| BB | | | 25 | | 4 | 0.1 |
| CC | | | 78 | | 45 | 0.7 |
| DD | | | 12 | | 0 | 0 |
| DD* | 90 | 73 | 18 | 0 | 0 | |
| EE | | | 84 | | 59 | 9 |
| FF | | | 49 | | 0 | 0 |
| FF* | 93 | 85 | 46 | 9 | 0 | |

| | | | | | | |
|---|---|---|---|---|---|---|
| *test repeated under the same conditions as previous | | | | | | |

### RESULTS: Test 2 Bottle Test Method

Test 2 conditions were similar to those of Test 1 but were designed to assess the effect on the initial formation of DSP solids from solution. As a result, a shorter holding time for the precipitation step and an increased initial concentration (higher "spike") of silica in the liquor was used in this method. Data is again presented as a percent of mass precipitated compared to an undosed control sample.

### Type 4.2 Fatty Amine Surfactant / Siloxane / Pentamine binder / Epoxide Binder

**Table 8: % Sodalite Precipitated**

| **Product** | **Dose (ppm)** | | |
|---|---|---|---|
| | 25 | 45 | 50 |
| JJ | | 36 | |
| DS | 40 | | 0 |
| ES | 18 | | 0 |
| FS | 55 | | 24 |
| GS | 50 | | 12 |

**Table 9: % Sodalite Precipitated**

| **Product** | **Dose (ppm)** | | | | | | | | | | |
|---|---|---|---|---|---|---|---|---|---|---|---|
| | 20 | 25 | 30 | 40 | 45 | 50 | 60 | 80 | 100 | 200 | 400 |
| SA | | | | | | | | | 71 | 62 | |
| SB | | | | | | | | | 41 | 1.8 | 1 |
| SC | | | | | | | | | | 36 | 2.5 |
| SD | | | | | | | | | | 59 | 7 |
| SE | | | | | | | | | | 23 | 3.4 |
| SF | | | | | | | | | | 12.8 | 2.3 |
| SG | | | | | | | | | | 45 | 0 |
| SH | | | | | | | | | 78 | 57 | |
| SI | | | | | | | | | | 0 | 0 |
| SJ | | | | | | | | | | 26 | 0.3 |
| SK | | | | | | | | | | 70 | 27 |
| SL | | | | | | | | | | 7 | 2 |
| SM | | | | | | | | | 77 | 0 | 0 |
| SN | | | | | | | | | | 156 | 37 |
| SO | | | | | | | | | 24 | 14 | |
| SP | | | | 97 | | | 77 | | 3.6 | 0 | |
| SQ | | | | 82 | | | 62 | | 1.5 | 0 | |
| SR | | | | | | | | | 69 | 28 | |
| ST | | | | 78 | | | 33 | | 2 | 0 | |
| SU | | | | 74 | | | 77 | | 0 | 0 | |
| SV | | | | | | | 30 | 4 | | | |
| SW | | | 56 | | 27 | | 0.5 | | | | |
| SX | | | | | | | 41 | 2 | | | |
| AS | | 70 | | | | 12 | | | | | |
| BS | | 40 | | | | 3.3 | | | | | |
| CS | | 32 | | | | 0 | | | | | |
| DS | | 40 | | | | 0 | | | | | |
| ES | | 18 | | | | 0 | | | | | |
| FS | | 55 | | | | 24 | | | | | |
| GS | | 50 | | | | 12 | | | | | |
| HS | 31 | | | 0 | | | | | | | |

### Type 4.3 Fatty Monoamine Surfactant / Siloxane / Pentamine binder / Epoxide binder

**Table 10: %Sodalite Precipitated**

| **Product** | **Dose (ppm)** | |
|---|---|---|
| | 20 | 40 |
| LL | 44 | 42 |
| MM | 47 | 41 |

### Test 2 - Surfactant-based Molecules versus Gen2 and Gen 3

**Table 11: % Sodalite Precipitated**

| **Product** | **Dose (ppm)** | | | | | | | | | | |
|---|---|---|---|---|---|---|---|---|---|---|---|
| | 20 | 25 | 30 | 50 | 100 | 200 | 400 | 500 | 800 | 1100 | 1200 |
| Gen2 | | | | 106 | 114 | 76 | | 39 | 40 | 37 | |
| Gen3 | | | | 88 | 92 | 81 | 55 | | 32 | | 32 |
| DD | | | | 103 | 79 | 41 | 1 | | | | |
| HS | 58 | 16 | 0 | | | | | | | | |

Results in table 11 above demonstrate the surprising difference between the inhibitory effects of previously identified small molecule inhibitors (Gen 2 and Gen 3 products) and surfactant based products (DD and HS). The latter are effective in eliminating DSP formation at doses as low as 30ppm. However, for the Gen2 and Gen 3 products some DSP precipitation still occurs under these test conditions even at doses greater than 1000ppm. Given the efficacy of the Gen 2 and Gen 3 products under test 1 conditions, such a result is unexpected and novel.

### RESULTS: Test 3 - Metal coupon test

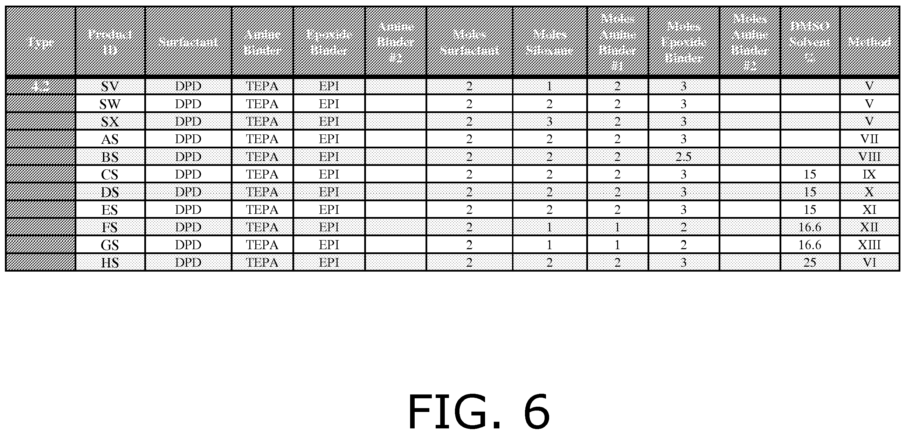

Test 3 conditions were the same as test 2 however, metal coupons were included in the bottles and small amounts of DSP were precipitated onto the surface of the metal. As shown in FIG. 6, SEM analysis of coupon tests using the invention shows that significant amounts of DSP were precipitated onto the untreated coupon, as well as those treated with extreme doses (1000ppm) of GEN2 and GEN3 products. However, on the coupon subjected to liquor treated with the surfactant based inhibitor (KK) at relatively low dose (100ppm) significantly less DSP was deposited. This indicates substantial and surprising efficacy of the surfactant based small molecule in inhibiting the formation of DSP scale.

**Table 2.15 Treatment of liquor exposed to metal coupons in test method 3.**

| **Coupon** | **Product type** | **Product** | **Dose (ppm)** |
|---|---|---|---|
| I | No Treatment | N/A | N/A |
| II | Product Type D | GEN2 | 1,000 |
| III | Product Type E | GEN3 | 1,000 |
| IV | Product Type 4.2 | KK | 100 |

## Claims

1. A method of reducing aluminosilicate containing scale in a Bayer process comprising:
adding to a Bayer liquor an aluminosilicate scale reducing amount of a non-polymeric reaction product resulting from the reaction of:
a surfactant, an amine binder, an epoxide binder, and a glycidoxyalkyltrimethoxysilane,
wherein the surfactant is dodecyl-1,3-propanediamine,

2. The method of claim 1, wherein the glycidoxyalkyltrimethoxysilane is 3-glycidoxyalkyltrimethoxysilane.

3. The method of claim 1, wherein the epoxide binder is a molecule according to formulas (I), (II), and any combination thereof:

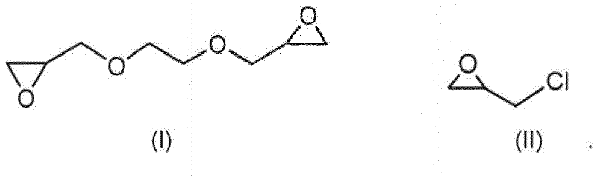

4. The method of claim 1, wherein the non-polymeric reaction product results from the reaction of the surfactant being dodecyl-1,3-propanediamine, the amine binder, the epoxide binder, the glycidoxyalkyltrimethoxysilane and a hydrophobe that is a C8-C10 aliphatic glycidyl ether.

5. The method of claim 1 wherein the reaction product has a molecular weight of less than 500 g/mol (daltons).

6. The method of claim 1 wherein the reaction product is

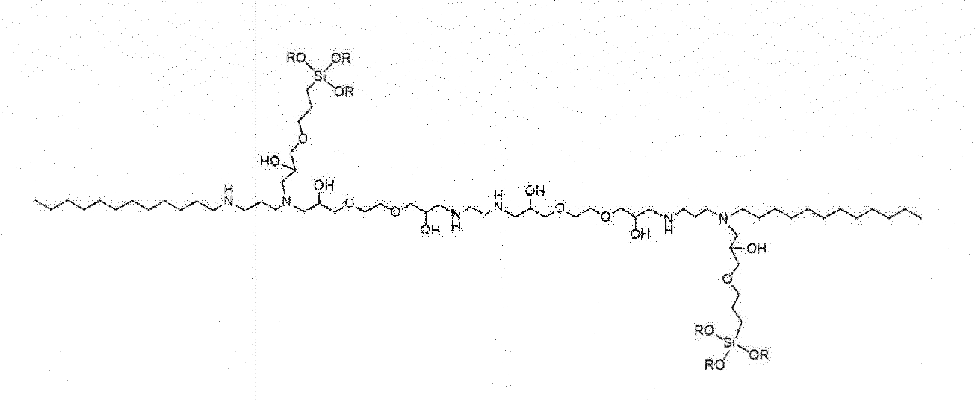

7. The method of claim 1 wherein the amine binder is one selected from the list consisting of: tetraethylenepentamine and ethylenediamine.

## Patentansprüche

1. Verfahren zum Reduzieren von aluminosilikathaltiger Kalkablagerung in einem Bayerprozess, umfassend:
Hinzufügen einer Aluminosilikat-Kalkablagerung-reduzierenden Menge eines nichtpolymeren Reaktionsprodukts zu einer Bayerlauge, wobei dieses Produkt aus der Reaktion von Folgendem resultiert:
einem Tensid, einem Aminbindemittel, einem Epoxidbindemittel und einem Glycidoxyalkyltrimethoxysilan, wobei das Tensid Dodecyl-1,3-propandiamin ist.

2. Verfahren nach Anspruch 1, wobei das Glycidoxyalkyltrimethoxysilan 3-Glycidoxyalkyltrimethoxysilan ist.

3. Verfahren nach Anspruch 1, wobei das Epoxidbindemittel ein Molekül nach Formeln (I), (II) und einer beliebigen Kombination davon ist:

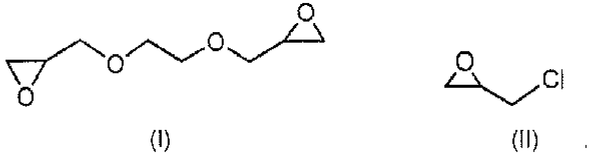

4. Verfahren nach Anspruch 1, wobei das nichtpolymere Reaktionsprodukt aus der Reaktion des Tensids Dodecyl-1,3-propandiamin, des Aminbindemittels, des Epoxidbindemittels, des Glycidoxyalkyltrimethoxysilans und einer hydrophoben Substanz, die ein aliphatischer C8-C10-Glycidylether ist, resultiert.

5. Verfahren nach Anspruch 1, wobei das Reaktionsprodukt eine Molekularmasse von weniger als 500 g/mol (Dalton) aufweist.

6. Verfahren nach Anspruch 1, wobei das Reaktionsprodukt Folgendes ist:

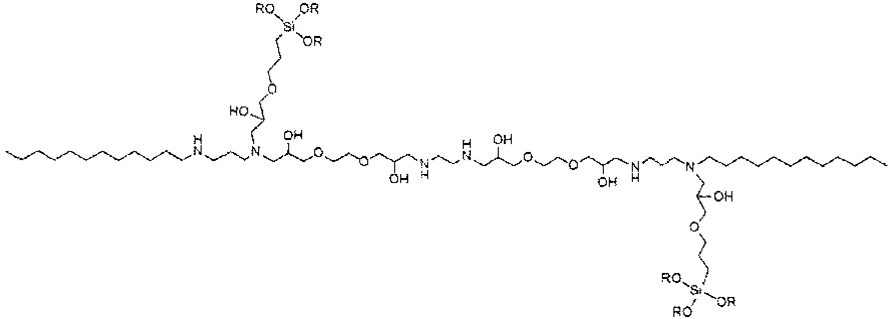

7. Verfahren nach Anspruch 1, wobei das Aminbindemittel eines ist, das aus der Liste ausgewählt ist, die aus Folgendem besteht:
Tetraethylenpentamin und Ethylendiamin.

## Revendications

1. Procédé de réduction du tartre contenant des aluminosilicates dans un procédé Bayer comprenant :
l'ajout, à une liqueur Bayer, d'une quantité réductrice de tartre d'aluminosilicate d'un produit de réaction non polymère résultant de la réaction de :
un tensioactif, un liant aminé, un liant époxyde et un glycidoxyalkyltriméthoxysilane, le tensioactif étant la dodécyl-1,3-propanediamine.

2. Procédé selon la revendication 1, dans lequel le glycidoxyalkyltriméthoxysilane est le 3-glycidoxyalkyltriméthoxysilane.

3. Procédé selon la revendication 1, dans lequel le liant époxyde est une molécule selon les formules (I), (II), et toute combinaison de celles-ci :

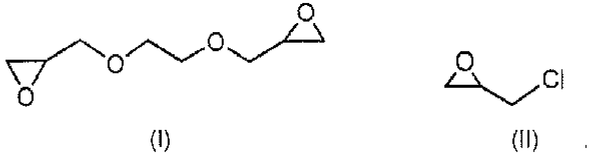

4. Procédé selon la revendication 1, dans lequel le produit de réaction non polymère résulte de la réaction du tensioactif qui est la dodécyl-1,3-propanediamine, le liant amine, le liant époxyde, le glycidoxyalkyltriméthoxysilane et un hydrophobe qui est un éther glycidylique aliphatique en C8 à C10.

5. Procédé selon la revendication 1, dans lequel le produit de réaction a un poids moléculaire inférieur à 500 g / mol (daltons).

6. Procédé selon la revendication 1, dans lequel le produit de réaction est

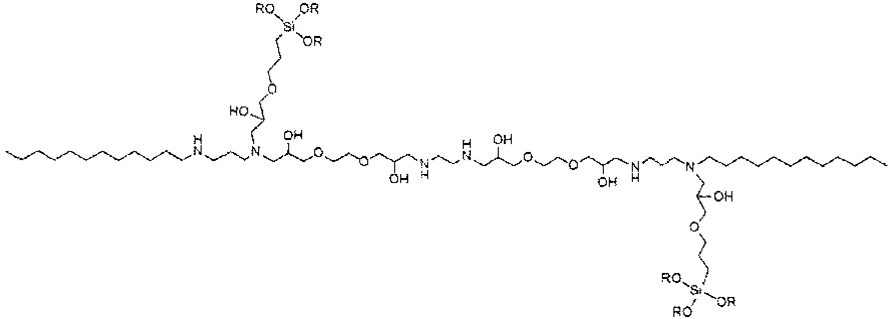

7. Procédé selon la revendication 1, dans lequel le liant amine est l'un choisi dans la liste constituée de :
tétraéthylènepentamine et éthylènediamine.
